(19) Europäisches Patentamt
European Patent Office
Office européen des brevets

(11) Veröffentlichungsnummer: **0 196 537**
**B1**

(12) # EUROPÄISCHE PATENTSCHRIFT

(45) Veröffentlichungstag der Patentschrift: **06.02.91**

(51) Int. Cl.$^5$: **C 09 B 29/085,** C 09 B 67/22, D 06 P 1/18

(21) Anmeldenummer: **86103592.1**

(22) Anmeldetag: **17.03.86**

(54) **Wasserunlösliche rote Monoazofarbstoffe, ihre Herstellung und Verwendung.**

(30) Priorität: **30.03.85 DE 3511728**

(43) Veröffentlichungstag der Anmeldung:
**08.10.86 Patentblatt 86/41**

(45) Bekanntmachung des Hinweises auf die Patenterteilung:
**06.02.91 Patentblatt 91/06**

(84) Benannte Vertragsstaaten:
**BE CH DE FR GB LI**

(56) Entgegenhaltungen:
**CH-A- 487 227**
**DE-A-1 794 402**
**DE-A-3 521 262**
**FR-A-2 352 864**
**FR-A-2 383 924**
**GB-A-1 125 683**
**GB-A-1 125 684**

**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft**
**Hanauer Landstrasse 526**
**D-6000 Frankfurt am Main 61 (DE)**

(72) Erfinder: **Bühler, Ulrich, Dr.**
**Kastanienweg 8**
**D-8755 Alzenau (DE)**
Erfinder: **Hähnke, Manfred, Dr.**
**Beringstrasse 13**
**D-6233 Kelkheim (DE)**
Erfinder: **Kunze, Michael, Dr.**
**Platanenweg 1 A**
**D-6238 Hofheim-Marxheim (DE)**
Erfinder: **Bode, Albert**
**Finkenweg 1**
**D-6231 Schwalbach (DE)**

(74) Vertreter: **Urbach, Hans-Georg, Dr.**
**Hanauer Landstrasse 526**
**D-6000 Frankfurt am Main 61 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 196 537 B1**

Courier Press, Leamington Spa, England.

**Beschreibung**

Die vorliegende Erfindung betrifft wertvolle neue, von ionogenen Gruppen freie Azofarbstoffe der allgemeinen Formel I

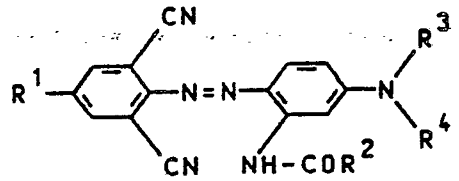

(I)

in der

$R^1$ Alkyl mit 1 bis 4 C-Atomen,

$R^2$ Alkyl mit 1 bis 3 C-Atomen,

$R^3$ Alkylcarbonyloxyethyl mit 1 bis 3 C-Atomen in der Alkylgruppe, Alkoxycarbonyloxyethyl mit 1 bis 4 C-Atomen in der Alkoxygruppe, Methoxyethoxycarbonyloxyethyl oder Ethoxyethoxycarbonyloxyethyl bedeuten und

$R^4$ eine der Bedeutungen von $R^3$ haben und zusätzlich Cyanethyl sein kann.

Die Erfindung betrifft auch Mischungen von Farbstoffen der allgemeinen Formel I sowie die Herstellung dieser Farbstoffe und ihrer Mischungen und ihre Verwendung zum Färben von hydrophoben Fasermaterialien.

Alkylgruppen mit 1 bis 3 C-Atomen in den Resten $R^2$ und $R^3$ bzw. Alkylgruppen mit 1 bis 4 C-Atomen in dem Rest $R^1$ können linear oder verzweigt sein. Beispiele für solche Reste sind Methyl, Ethyl, n-Propyl, i-Propyl, n-Butyl, i-Butyl und sek.-Butyl.

Alkoxygruppen mit 1 bis 4 C-Atomen im Rest $R^3$ können ebenfalls geradkettig oder verzeigt sein und sind z.B. Methoxy, Ethoxy, n-Propoxy, i-Propoxy, n-Butoxy, i-Butoxy und sek.-Butoxy.

Bevorzugte Reste für $R^1$ sind Methyl, Ethyl und i-Propyl; von denen Methyl besonders bevorzugt ist.

Bevorzugte Alkylcarbonyloxyethyl-Reste für $R^3$ sind Methylcarbonyloxyethyl (=Acetoxyethyl) und Ethylcarbonyloxyethyl (=Propoxyethyl).

Bevorzugte Kombinationen von $R^3$ und $R^4$ sind solche, in denen $R^3$ und $R^4$ gleich sind und solche, in denen $R^4$ Cyanethyl und $R^3$ Alkylcarbonyloxyethyl mit 1 bis 3 C-Atomen in der Alkylgruppe oder Alkoxycarbonyloxyethyl mit 1 bis 4 C-Atomen in der Alkoxygruppe bedeuten.

Besonders bevorzugte Farbstoffe sind solche mit bevorzugten Kombinationen von $R^3$ und $R^4$ und einer bevorzugten Bedeutung von $R^1$, insbesondere mit der Bedeutung Methyl für $R^1$.

Den erfindungsgemäßen Farbstoffen ähnliche Farbtoffe sind bereits bekannt und in der DE—PS 1 794 402 beschrieben. Es wurde jedoch überraschenderweise gefunden, daß die erfindungsgemäßen Farbstoffe diesen bekannten Farbstoffen im färberischen Verhalten auf verschiedenen Substraten im färberischen Verhalten auf verschiedenen Substraten sowie bei einigen wichtigen Anwendungs- und Gebrauchsechtheiten, wie pH-Empfindlichkeit, Thermofixierechtheit, Waschechtheit und Lichtechtheit, deutlich überlegen sind. Die Herstellung der erfindungsgemäßen Farbstoffe erfolgt vorzugsweise dadurch, daß man einen Azofarbstoff der Formel II

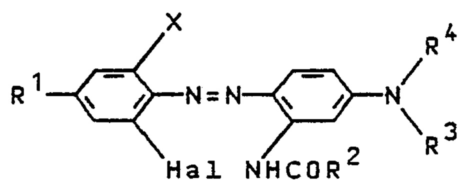

(II)

in welcher $R^1$, $R^2$, $R^3$ und $R^4$ die vostehenden Bedeutungen haben, X Cyan oder Hal und Hal ein Halogenatom wie Chlor oder insbesondere Brom bedeuten, in an sich bekannter Weise, z.B. nach den Angaben der DE—OS 1809920, der DE—OS 1809921, der GB—PS 1184825, der DE—AS 1544563, der DE—OS 2310745, der DE—AS 2456495, der DE—AS 2610675, der DE—OS 2724116, der DE—OS 2724117, der DE—OS 2834137, der DE—OS 2341109, der US—PS 3821195, der DE—OS 2715034 oder der DE—OS 2134896 einer nukleophilen Austauschreaktion unterwirft, wobei als nucleophiles Agenz das Cyanidion $CN^{\ominus}$ eingesetzt wird. Bei dieser Reaktion wird in dem Farbstoff der Formel II Hal (gegebenenfalls auch das für X stehende Hal) gegen CN ausgetauscht.

Als Lösungsmittel für die Austauschreaktion werden inerte organische Lösungsmittel, wie z.B. Nitrobenzol oder Glycol- oder Diglycol-mono-methyl oder -mono-ethylether oder Mischungen solcher Lösungsmittel untereinander und mit tertiären organischen Stickstoffbasen, dipolare aprotische Lösungsmittel, wie z.B. N-Methylpyrrolidon, Pyridin, Dimethylformamid, Dimethylsulfoxyd oder Dicyandialkylthioether eingesetzt. Weiterhin sind als Medium für die Austauschreaktion Wasser oder wäßrige Systeme Bestehend aus Wasser und einem mit Wasser unmischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150°C.

Das nucleophile Agenz $CN^{\ominus}$ wird der Reaktion in Form eines gegebenenfalls komplexen Metallcyanids, wie z.B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfer-I-cyanid, wobei das Gewichtsverhältnis von Alkali und Kupfersalz in weiten Grenzen variiert werden kann.

Der gängige Bereich für das Gewichtsverhältnis Alkalicyanid:Kupfer-I-cyanid liegt bei 5:95 bis 95:5. Auch außerhalb dieser Grenzen ist noch die positive gegenseitige Beeinflussung der Komponenten feststellbar Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe erforderlichen Farbstoffe der Formel II können dadurch hergestellt werden, daß eine Diazoniumverbindung eines aromatischen Amins der allgemeinen Formel III

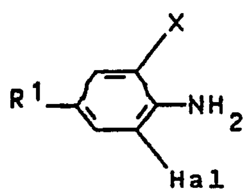

(III)

in an sich bekannter Weise mit einer Kupplungskomponente der allgemeinen Formel IV

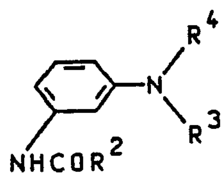

(IV)

worin X, Hal, $R^1$, $R^2$, $R^3$ und $R^4$ die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumion bildenden Systemen in einer Mineralsäure oder einem mineralsauren wäßrigen Medium, einer Niederalkancarbonsäure, wie z.B. Ameinsensäure, Essigsäure oder Propionsäure oder deren Mischungen, oder einem organischen Lösungsmittel bei Temperaturen von −15°C bis 40°C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel II kann wie üblich isoliert und getrocknet werden.

Die benötigten Kupplungskomponenten der Formel IV lassen sich aus bekannten Handelsprodukten nach bekannten Verfahren herstellen.

Ein weiteres Verfahren zur Herstellung der erfindungsgemäßen Farbstoffe besteht darin, daß man ein Amin der Formel V

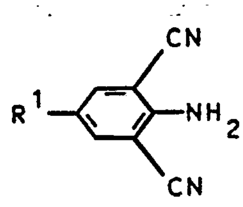

(V)

diazotiert und auf eine Kupplungskomponente der Formel IV

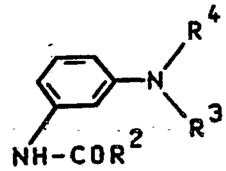

(IV)

wobei $R^1$, $R^2$, $R^3$ und $R^4$ die oben angegebenen Bedeutungen haben, kuppelt.

Aus den Aminen der allgemeinen Formel V werden die Diazoniumverbindungen in an sich bekannter Weise durch Einwirkung von salpetriger Säure oder anderen, Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, oder einem organischen Lösungsmittel bei Temperaturen von −20° bis 20°C erhalten.

Die Kupplung erfolgt auch hier in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäurtem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmaßig sein, während der Kupplung den pH-Wert abzupuffern, z.B. durch Zugabe von Natriumacetat. Die Kupplung ist nach einigen Stunden beendet, und der Farbstoff kann wie üblich isoliert und getrocknet werden.

Erfindungsgemäße Farbstoffmischungen bestehen aus zwei oder mehreren Farbstoffen der Formel I, in der $R^1$ bis $R^4$ die oben angegebenen Bedeutungen haben. Bevorzugt sind Mischungen aus Farbstoffen der Formel I, bei denen alle $R^1$ Methyl sind. Besonders bevorzugt sind Mischungen aus Farbstoffen, die sich nur in der Bedeutung der Reste $R^2$ unterscheiden, insbesondere wenn bei allen Einzelfarbstoffen $R^1$ für Methyl steht.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10% und ihr maximaler Gewichtsanteil 90%. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70%.

Die erfindungsgemäßen Farbstoffmischungen können nach verschiedenen Verfahren hergestellt werden. Einmal durch Mischung von mindestens zwei Einzelfarbstoffen der Formel I, vorzugsweise unter Zusatz von Dispergiermitteln. Dieser Mischprozeß erfolgt bei Temperaturen von 0 bis 190°C, zweckmäßigerweise in geeigneten Mühlen, beispielsweise Kugel- und Sandmühlen, sowie Knetern, kann aber auch durch Mischen mit der Hand oder durch Einrühren in Dispersionsmittel oder Färbeflotten bewirkt werden.

Als Dispergiermittel kommen solche anionischer oder nichtanionischer Natur in Betracht. Als anionische Dispergiermittel seien genannt Kondensationsprodukte von Naphthalin, Formaldehyd und Schwefelsäure sowie Ligninsulfonate. Geeignete nichtionische Dispergiermittel sind z.B. in der DE—OS 27 57 330 beschrieben.

Ein weiteres Verfahren zur Herstellung der erfindungsgemäßen Farbstoffmischungen besteht darin, daß man ein Amin der Formel V

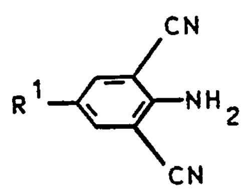

(V)

diazotiert und auf eine Mischung aus mindestens zwei verschiedenen Kupplungskomponenten der Formel IV

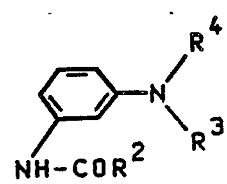

(IV)

wobei $R^1$, $R^2$, $R^3$ und $R^4$ die oben angegebenen Bedeutungen haben, kuppelt.

Die Zusammensetzung der Mischung der Kupplungskomponenten wird dabei so gewählt, daß die gewünschten erfindungsgemäße Farbstoffmischungen entstehen. Die Diazotierung und Kupplung wird dabei in an sich bekannter Weise durchgeführt, wie sie für die Herstellung von Einzelfarbstoffen üblich ist.

Sollen Mischungen von Farbstoffen der Formel I hergestellt werden, deren Komponenten sich bezüglich $R^1$ unterscheiden, so wird anstelle eines einzelnen Amins der Formel V eine Mischung von mindestens zwei Aminen der Formel V diazotiert, deren Einzelkomponenten sich bezüglich $R^1$ unterscheiden, und auf eine Kupplungskomponente der Formel IV oder ein Gemisch aus mindestens zwei verschiedenen Kupplungskomponenten der Formel IV gekuppelt.

Nach einem bevorzugten weiteren Verfahren können die neuen Farbstoffmischungen dadurch hergestellt werden, daß man in Farbstoffmischungen, die aus mindestens zwei Farbstoffen der Formel II bestehen, in an sich bekannter Weise Halogen gegen Cyan austauscht, wie es z.B. vorstehend bereits für die Einzelfarbstoffe beschrieben ist. Die Zusammensetzung der Mischung der Farbstoffe der Formel II wird dabei so gewählt, daß erfindungsgemäße Farbstoffmischungen entstehen.

Besonders bevorzugt sind Farbstoffmischungen, die im Verlaufe ihrer Herstellung auf Temperaturen von mindestens 80°C, vorzugsweise 90 bis 150°C, besonders bevorzugt 100 bis 140°C, erhitzt worden sind, bzw. solche Farbstoffmischungen, die aus Mischkristallen bestehen, oder Mischkristalle enthalten, die aus zwei oder mehreren der Farbstoffe der Formel I gebildet sind.

Farbstoffmischungen, die im Verlauf ihrer Herstellung auf die genannten Temperaturen von mindestens 80°C erhitzt worden sind, können dadurch hergestellt werden, daß man die Einzelfarbstoffe in Substanz oder bevorzugt in einem Dispersionsmittel, wie z.B. Wasser, 0,5 bis 3 Stunden lang auf die genannten Temperaturen erhitzt, dann abkühlt, in der Regel isoliert und dann miteinander vermischt. Die Erhitzung kann gegebenenfalls auch im Rahmen einer Umkristallisation der Einzelfarbstoffe durchgeführt werden. Die Erhitzung in Wasser auf Temperaturen über 100°C wird in einem geschlossenen Gefäß durchgeführt. Bei der Erhitzung in einem Dispersionsmittel kann der Zusatz eines oder mehrerer der weiter unten angegebenen Dispergiermittel zweckmäßig sein.

Wenn man ein aus zwei oder mehreren Einzelfarbstoffen bestehendes Farbstoffgemisch auf die vorstehend genannten Temperaturen erhitzt, werden in der Regel Mischkristalle erhalten, die aus zwei oder mehr verschiedenen Farbstoffen der Formel I bestehen.

Erfindungsgemäße aus Mischkristallen bestehende oder Mischkristalle enthaltende Farbstoffmischungen können auch dadurch hergestellt werden, daß man eine Mischung aus mindestens zwei getrennt hergestellten, verschiedenen Farbstoffen der Formel I auflöst und zur Kristallisation oder Ausfällung bringt. Zur Auflösung der Farbstoffmischung sind z.B. organische Lösungsmittel, wie Dimethylformamid, Dimethylsulfoxid, Chlorbenzol, o-Dichlorbenzol, Toluol etc. geeignet. Auch Gemische verschiedener Lösungsmittel können verwendet werden. Die Auflösung erfolgt zweckmäßigerweise bei der Siedetemperatur des Lösungsmittels oder Lösungsmittelgemischs. Beim Abkühlen kristallisieren dann Mischkristalle aus. Statt durch Abkühlung können die Mischkristalle auch durch Ausfällung, d.h. durch Zusatz eines Lösungsmittels, in dem der Farbstoff weniger löslich ist, zur Abscheidung gebracht werden.

Besonders bevorzugt werden Mischkristalle auch erhalten, wenn man den oben erwähnten Austausch von Halogen gegen Cyan bei einem aus Farbstoffen der Formel II bestehenden Gemisch bei den vorstehend genannten Temperaturen von mindestens 80°C durchführt.

Die Mischkristallbildung kann bevorzugt auch so durchgeführt werden, daß man eine Mischung aus mindestens zwei getrennt hergestellten, verschiedenen Farbstoffen der Formel I in einem schlecht lösenden Lösungsmittel oder Dispersionsmittel anwärmt, wobei nur eine teilweise bis herab zu einer verschwindend geringen Auflösung stattfindet, und die Mischung dadurch in Mischkristalle umwandelt. Als besonders geeignetes Lösungs- oder besser gesagt Dispersionsmittel für eine derartige Umwandlung der Farbstoffmischungen in Mischkristalle hat sich Wasser bei Temperaturen von 80 bis 190°C, insbesondere 90 bis 150°C, vorzugsweise 100 bis 140°C, erwiesen. Es ist selbstverständlich, daß die Erhitzung bei Temperaturen, die nicht mehr in einem offenen Gefäß erreicht werden können, in einem Autoklaven durchgeführt werden. Der Zusatz eines oder mehrerer Lösungsvermittler ist dabei zweckmäßig. Ein solcher Lösungsvermittler ist z.B. ein in Wasser ganz lösliches Lösungsmittel, wie z.B. Ethanol, oder ein in Wasser nur teilweise lösliches organisches Lösungsmittel, wie z.B. n-Butanol.

Besonders bevorzugt wird jedoch die Umwandlung der Farbstoffmischungen in Mischkristalle durch Erhitzen in Wasser auf die vorstehend genannten Temperaturen unter Zusatz eines oder mehrerer Emulgatoren und/oder Dispergiermittel durchgeführt.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren. Alkyl- oder Alkylarylsulfonate, sowie Alkyl-aryl-polyglykolethersulfate. Nichtionische Dispergiermittel oder Emulgatoren sind z.B. Umsetzungsprodukte von Alkylenoxiden, wie z.B. Ethylen- oder Propylenoxid mit alkylierbaren Verbindungen, wie z.B. Fettalkoholen, Fettamine, Fettsauren, Phenolen, Alkylphenolen, Arylalkylphenolen, Arylalkylarylphenolen und Carbonsäure-amiden, wie z.B. Anlagerungsprodukte von 5 bis 10 Ethylenoxid-Einheiten an $C_8$—$C_{10}$-Alkylphenole.

Die Umwandlung der Farbstoffgemische in Mischkristalle durch Erhitzen in Wasser ist in der Regel nach 0,5 bis 10 Stunden, vorzugsweise 1 bis 3 Stunden, beendet. Das Vorliegen von Mischkristallen kann durch Röntgenzählrohrdiagramme nachgewiesen werden.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2½-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Licht, Thermofixier-, Thermomigrier- und Waschechtheit und einer geringen pH- und Reduktions-empfindlichkeit.

Die erfindungsgemäßen Farbstoffe oder Farbstoffmischungen eignen sich auch zum Färben der vorstehend aufgeführten hydrophoben Materialien aus organischen Lösungsmittel nach den hierbei bekannten Methoden und zum Färben in den Masse.

In den bei obigen Applikationen eingesetzten Färbeflotten und Druckpasten sollen die erfindungsgemäßen Farbstoffe der Farbstoffmischungen in möglichst feiner Verteilung vorliegen.

Die Feinverteilung der Farbstoffe erfolgt in an sich bekannter Weise dadurch, daß an den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 μm, vorzugsweise bei etwa 1 μm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25% eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den

Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

In eine Suspension aus 100 ml Dimethylsulfoxid, 4,3 g Natriumcyanid und 14 g Kupfer-I-cyanid werden bei 70 bis 75°C 61,1 g des Farbstoffs der Formel VI

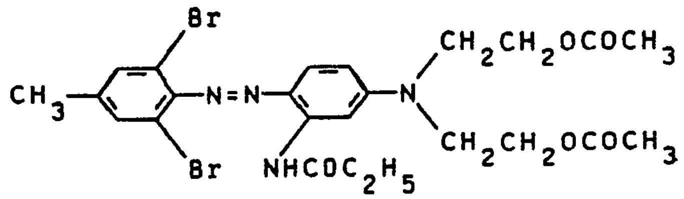

(VI)

eingetragen und 30 min bei dieser Temperatur gerührt. Dann wird die Temperatur 30 min auf 110°C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 43 g eines blaustichig roten Farbstoffs der Formel VII

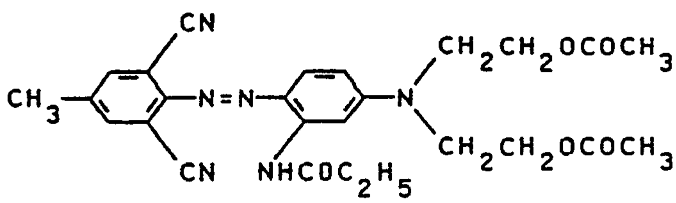

(VII)

der bei 163°C schmilzt und bei 520 nm sein Absorptions-maximum besitzt.

Durch einen praxisüblichen Finish-Prozeß durch wäßrige Mahlung in einer Perlmühle mit einem praxisüblichen Dispergiermittel auf Basis Ligninsulfonat und anschließende Sprühtrocknung erhält man eine färbefertige Farbstoffpräparation.

b) 1,2 g der so erhaltenen Farbstoffpräparation werden in 2000 g Wasser dispergiert. Die Dispersion wird mit Essigsäure auf einen pH-Wert von 4—5 eingestellt und mit 4 g wasserfreiem Natriumacetat und 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 130°C. Nach anschließendem Spülen, reduktivem Nachbehandeln mit einer 0,2%igen wäßrigen Natriumdithionit Lösung während 15 min bei 70 bis 80°C, Spülen und Trocknen erhält man eine farbstarke rote Färbung mit sehr guten coloristischen Eigenschaften, insbesondere sehr guter Thermofixier-, Thermomigrier- und Waschechtheit.

Beispiel 2

Werden, wie in Beispiel 1 beschrieben, 65,7 g des Farbstoffs der Formel VIII

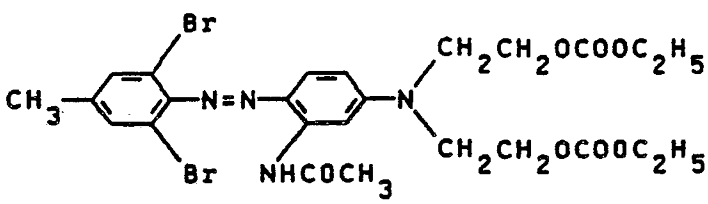

(VIII)

einem Cyanidaustausch unterworfen und dabei die Temperatur innerhalb von 30 min nicht auf 110°C, sondern auf 120°C angehoben und der Farbstoff bei 40 bis 50°C abgesaugt und mit 100 ml 40°C warmem Dimethylsulfoxid gewaschen, so erhält man 45,6 g eines blaustichig roten Farbstoffs der Formel IX

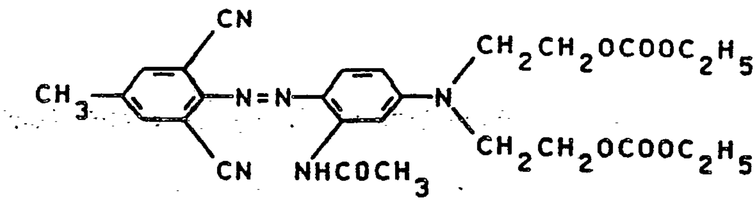

(IX)

der bei 193°C schmilzt und bei 516 nm sein Absorptionsmaximum hat.

Analog den Beispielen 1 und 2 lassen sich die erfindungsgemäßen Farbstoffe der folgenden Tabelle herstellen. Sie färben hydrophobe Fasern ebenfalls in vollen roten Nuancen mit ausgezeichneten Echtheiten.

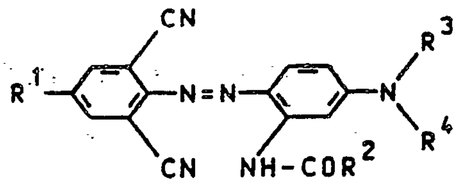

(I)

| $R^1$ | $R^2$ | $R^3$ | $R^4$ |
|---|---|---|---|
| $CH_3$ | $CH_3$ | $(CH_2)_2OCOCH_3$ | $(CH_2)_2OCOCH_3$ |
| $CH_3$ | $i-C_3H_7$ | $(CH_2)_2OCOCH_3$ | $(CH_2)_2OCOCH_3$ |
| $CH_3$ | $n-C_3H_7$ | $(CH_2)_2OCOCH_3$ | $(CH_2)_2OCOCH_3$ |
| $CH_3$ | $CH_3$ | $(CH_2)_2OCOC_2H_5$ | $(CH_2)_2OCOC_2H_5$ |
| $CH_3$ | $C_2H_5$ | $(CH_2)_2OCOC_2H_5$ | $(CH_2)_2OCOC_2H_5$ |
| $CH_3$ | $n-C_3H_7$ | $(CH_2)_2OCOC_2H_5$ | $(CH_2)_2OCOC_2H_5$ |
| $CH_3$ | $CH_3$ | $(CH_2)_2OCOi-C_3H_7$ | $(CH_2)_2OCOi-C_3H_7$ |
| $CH_3$ | $CH_3$ | $(CH_2)_2OCOn-C_3H_7$ | $(CH_2)_2OCOn-C_3H_7$ |
| $CH_3$ | $CH_3$ | $(CH_2)_2OCOOCH_3$ | $(CH_2)_2OCOOCH_3$ |
| $CH_3$ | $C_2H_5$ | $(CH_2)_2OCOOCH_3$ | $(CH_2)_2OCOOCH_3$ |
| $CH_3$ | $i-C_3H_7$ | $(CH_2)_2OCOOCH_3$ | $(CH_2)_2OCOOCH_3$ |
| $CH_3$ | $n-C_3H_7$ | $(CH_2)_2OCOOCH_3$ | $(CH_2)_2OCOOCH_3$ |
| $CH_3$ | $C_2H_5$ | $(CH_2)_2OCOOC_2H_5$ | $(CH_2)_2OCOOC_2H_5$ |
| $CH_3$ | $n-C_3H_7$ | $(CH_2)_2OCOOC_2H_5$ | $(CH_2)_2OCOOC_2H_5$ |
| $CH_3$ | $CH_3$ | $(CH_2)_2OCOOn-C_3H_7$ | $(CH_2)_2OCOOn-C_3H_7$ |
| $CH_3$ | $C_2H_5$ | $(CH_2)_2OCOOn-C_3H_7$ | $(CH_2)_2OCOOn-C_3H_7$ |
| $CH_3$ | $CH_3$ | $(CH_2)_2OCOOi-C_3H_7$ | $(CH_2)_2OCOOi-C_3H_7$ |
| $CH_3$ | $C_2H_5$ | $(CH_2)_2OCOOi-C_3H_7$ | $(CH_2)_2OCOOi-C_3H_7$ |
| $CH_3$ | $CH_3$ | $(CH_2)_2OCOOn-C_4H_9$ | $(CH_2)_2OCOOn-C_4H_9$ |
| $CH_3$ | $C_2H_5$ | $(CH_2)_2OCOOi-C_4H_9$ | $(CH_2)_2OCOOi-C_4H_9$ |
| $CH_3$ | $CH_3$ | $(CH_2)_2OCOO(CH_2)_2OCH_3$ | $(CH_2)_2OCOO(CH_2)_2OCH_3$ |
| $CH_3$ | $C_2H_5$ | $(CH_2)_2OCOO(CH_2)_2OCH_3$ | $(CH_2)_2OCOO(CH_2)_2OCH_3$ |
| $CH_3$ | $CH_3$ | $(CH_2)_2OCOO(CH_2)_2OC_2H_5$ | $(CH_2)_2OCOO(CH_2)_2OC_2H_5$ |
| $CH_3$ | $C_2H_5$ | $(CH_2)_2OCOO(CH_2)_2OC_2H_5$ | $(CH_2)_2OCOO(CH_2)_2OC_2H_5$ |
| $CH_3$ | $CH_3$ | $(CH_2)_2OCOCH_3$ | $(CH_2)_2CN$ |
| $CH_3$ | $C_2H_5$ | $(CH_2)_2OCOCH_3$ | $(CH_2)_2CN$ |

| $R^1$ | $R^2$ | $R^3$ | $R^4$ |
|---|---|---|---|
| $CH_3$ | $n-C_3H_7$ | $(CH_2)_2OCOCH_3$ | $(CH_2)_2CN$ |
| $CH_3$ | $CH_3$ | $(CH_2)_2OCOC_2H_5$ | $(CH_2)_2CN$ |
| $CH_3$ | $C_2H_5$ | $(CH_2)_2OCOC_2H_5$ | $(CH_2)_2CN$ |
| $CH_3$ | $i-C_3H_7$ | $(CH_2)_2OCOC_2H_5$ | $(CH_2)_2CN$ |
| $CH_3$ | $CH_3$ | $(CH_2)_2OCOOC_2H_5$ | $(CH_2)_2CN$ |
| $CH_3$ | $C_2H_5$ | $(CH_2)_2OCOOC_2H_5$ | $(CH_2)_2CN$ |
| $CH_3$ | $n-C_3H_7$ | $(CH_2)_2OCOOC_2H_5$ | $(CH_2)_2CN$ |
| $CH_3$ | $C_2H_5$ | $(CH_2)_2OCOOn-C_3H_7$ | $(CH_2)_2CN$ |
| $CH_3$ | $CH_3$ | $(CH_2)_2OCOOi-C_3H_7$ | $(CH_2)_2CN$ |
| $CH_3$ | $C_2H_5$ | $(CH_2)_2OCOOi-C_3H_7$ | $(CH_2)_2CN$ |
| $CH_3$ | $C_2H_5$ | $(CH_2)_2OCOO(CH_2)_2OCH_3$ | $(CH_2)_2CN$ |
| $C_2H_5$ | $CH_3$ | $(CH_2)_2OCOCH_3$ | $(CH_2)_2OCOCH_3$ |
| $C_2H_5$ | $C_2H_5$ | $(CH_2)_2OCOCH_3$ | $(CH_2)_2OCOCH_3$ |
| $C_2H_5$ | $n-C_3H_7$ | $(CH_2)_2OCOCH_3$ | $(CH_2)_2OCOCH_3$ |
| $C_2H_5$ | $CH_3$ | $(CH_2)_2OCOC_2H_5$ | $(CH_2)_2OCOC_2H_5$ |
| $C_2H_5$ | $CH_3$ | $(CH_2)_2OCOOC_2H_5$ | $(CH_2)_2OCOOC_2H_5$ |
| $C_2H_5$ | $C_2H_5$ | $(CH_2)_2OCOOC_2H_5$ | $(CH_2)_2OCOOC_2H_5$ |
| $C_2H_5$ | $CH_3$ | $(CH_2)_2OCOOi-C_3H_7$ | $(CH_2)_2OCOOi-C_3H_7$ |
| $C_2H_5$ | $CH_3$ | $(CH_2)_2OCOCH_3$ | $(CH_2)_2CN$ |
| $C_2H_5$ | $C_2H_5$ | $(CH_2)_2OCOCH_3$ | $(CH_2)_2CN$ |
| $n-C_3H_7$ | $CH_3$ | $(CH_2)_2OCOCH_3$ | $(CH_2)_2CN$ |
| $n-C_3H_7$ | $C_2H_5$ | $(CH_2)_2OCOCH_3$ | $(CH_2)_2CN$ |
| $n-C_3H_7$ | $CH_3$ | $(CH_2)_2OCOCH_3$ | $(CH_2)_2OCOCH_3$ |
| $i-C_3H_7$ | $CH_3$ | $(CH_2)_2OCOCH_3$ | $(CH_2)_2OCOCH_3$ |
| $i-C_3H_7$ | $C_2H_5$ | $(CH_2)_2OCOCH_3$ | $(CH_2)_2OCOCH_3$ |
| $i-C_3H_7$ | $CH_3$ | $(CH_2)_2OCOC_2H_5$ | $(CH_2)_2OCOC_2H_5$ |
| $i-C_3H_7$ | $C_2H_5$ | $(CH_2)_2OCOC_2H_5$ | $(CH_2)_2OCOC_2H_5$ |
| $i-C_3H_7$ | $n-C_3H_7$ | $(CH_2)_2OCOCH_3$ | $(CH_2)_2OCOCH_3$ |
| $i-C_3H_7$ | $CH_3$ | $(CH_2)_2OCOOC_2H_5$ | $(CH_2)_2OCOOC_2H_5$ |
| $i-C_3H_7$ | $C_2H_5$ | $(CH_2)_2OCOOi-C_3H_7$ | $(CH_2)_2OCOOi-C_3H_7$ |
| $i-C_3H_7$ | $CH_3$ | $(CH_2)_2OCOCH_3$ | $(CH_2)_2CN$ |
| $i-C_3H_7$ | $CH_3$ | $(CH_2)_2OCOC_2H_5$ | $(CH_2)_2CN$ |
| $i-C_3H_7$ | $C_2H_5$ | $(CH_2)_2OCOCH_3$ | $(CH_2)_2CN$ |
| $i-C_3H_7$ | $CH_3$ | $(CH_2)_2OCOOC_2H_5$ | $(CH_2)_2CN$ |

| $R^1$ | $R^2$ | $R^3$ | $R^4$ |
|---|---|---|---|
| $i-C_3H_7$ | $C_2H_5$ | $(CH_2)_2OCOOC_2H_5$ | $(CH_2)_2CN$ |
| $i-C_3H_7$ | $C_2H_5$ | $(CH_2)_2OCOOi-C_3H_7$ | $(CH_2)_2CN$ |
| $i-C_3H_7$ | $C_2H_5$ | $(CH_2)_2OCOO(CH_2)_2OCH_3$ | $(CH_2)_2CN$ |
| $n-C_4H_9$ | $CH_3$ | $(CH_2)_2OCOCH_3$ | $(CH_2)_2OCOCH_3$ |
| $n-C_4H_9$ | $C_2H_5$ | $(CH_2)_2OCOCH_3$ | $(CH_2)_2OCOCH_3$ |
| $i-C_4H_9$ | $C_2H_5$ | $(CH_2)_2OCOCH_3$ | $(CH_2)_2OCOCH_3$ |
| $i-C_4H_9$ | $C_2H_5$ | $(CH_2)_2OCOCH_3$ | $(CH_2)_2CN$ |
| $i-C_4H_9$ | $C_2H_5$ | $(CH_2)_2OCOOC_2H_5$ | $(CH_2)_2OCOOC_2H_5$ |
| $t-C_4H_9$ | $C_2H_5$ | $(CH_2)_2OCOCH_3$ | $(CH_2)_2OCOCH_3$ |
| $s-C_4H_9$ | $CH_3$ | $(CH_2)_2OCOCH_3$ | $(CH_2)_2OCOCH_3$ |
| $CH_3$ | $CH_3$ | $(CH_2)_2OCOOs-C_4H_9$ | $(CH_2)_2OCOOs-C_4H_9$ |

In der vorstehenden Tabelle bedeuten:

n = normal
i = iso
s = sekundär und
t = tertiär

**Patentansprüche**

1. Von ionogenen Gruppen freier Azofarbstoff der allgemeinen Formel I

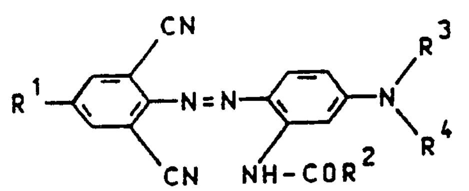

(I)

in der
$R^1$ Alkyl mit 1 bis 4 C-Atomen,
$R^2$ Alkyl mit 1 bis 3 C-Atomen,
$R^3$ Alkylcarbonyloxyethyl mit 1 bis 3 C-Atomen in der Alkylgruppe, Alkoxycarbonyloxyethyl mit 1 bis 4 C-Atomen in der Alkoxygruppe, Methoxyethoxycarbonyloxyethyl oder Ethoxyethoxycarbonyloxyethyl bedeuten und $R^4$ eine der Bedeutungen von $R^3$ haben und zusätzlich Cyanethyl sein kann.

2. Azofarbstoff nach Anspruch 1, dadurch gekennzeichnet, daß $R^1$ Ethyl oder i-Propyl oder vorzugsweise Methyl bedeutet.

3. Azofarbstoff nach Anspruch 1 und/oder 2, dadurch gekennzeichnet, daß $R^3$ Methylcarbonyloxyethyl oder Ethylcarbonyloxyethyl bedeutet.

4. Mischung von zwei oder mehr verschiedenen Azofarbstoffen der Formel I eines oder mehrerer der Ansprüche 1 bis 3.

5. Mischung von Azofarbstoffen nach Anspruch 4, dadurch gekennzeichnet, daß bei allen Farbstoffen der Formel I $R^1$ Methyl bedeutet.

6. Mischung von Azofarbstoffen nach Anspruch 4 und/oder 5, dadurch gekennzeichnet, daß sie im

Verlauf ihrer Herstellung auf eine Temperatur von mindestens 80°C, vorzugsweise 90 bis 150°C, erhitzt worden ist.

7. Azofarbstoff der Formel

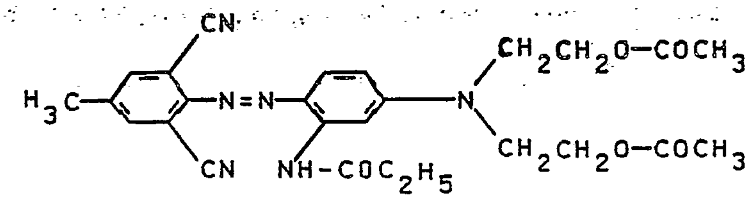

(I)

8. Verfahren zur Herstellung der Azofarbstoffe der Formel I eines oder mehrerer der Ansprüche 1 bis 3 oder des Azofarbstoffs des Anspruchs 7, dadurch gekennzeichnet, daß man

a) einen Azofarbstoff der Formel II

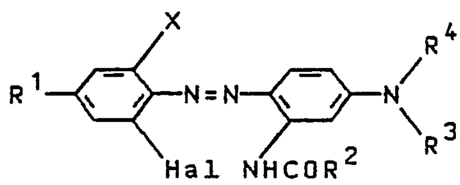

(II)

wobei

$R^1$, $R^2$, $R^3$ und $R^4$ die in den Ansprüchen 1 bis 3 angegebenen Bedeutungen besitzen,

X Cyan oder Hal und

Hal ein Halogenatom

bedeuten, einer nukleophilen Cyanid-Austauschreaktion unterwirft oder daß man

b) ein Amin der Formel V

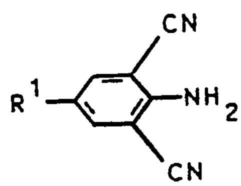

(V)

diazotiert und auf eine Kupplungskomponente der Formel IV

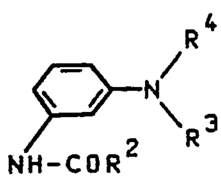

(IV)

wobei $R^1$, $R^2$, $R^3$ nd $R^4$ die oben angegebenen Bedeutungen haben, kuppelt.

9. Verfahren zur Herstellung der Mischungen von Azofarbstoffen der Formel I gemäß einem oder mehreren der Ansprüche 4 bis 6, dadurch gekennzeichnet, daß man

a) zwei oder mehrere Einzelfarbstoffe der Formel I miteinander mischt oder daß man

b) ein oder mehrere Amine der Formel V

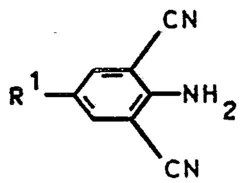

(V)

diazotiert und auf eine Mischung aus mindestens zwei verschiedenen Kupplungskomponenten der Formel IV

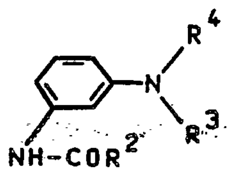

(IV)

wobei $R^1$, $R^2$, $R^3$ und $R^4$ die in den Ansprüchen 1 bis 3 angegebenen Bedeutungen besitzen, kuppelt, oder daß man

c) mehrere Amine der Formel V

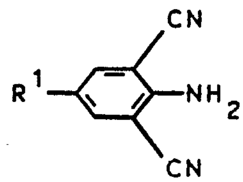

(V)

diazotiert und auf eine Kupplungskomponente der Formel IV

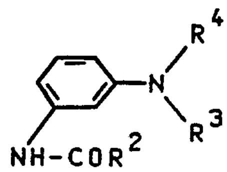

(IV)

wobei $R^1$, $R^2$, $R^3$ und $R^4$ die in den Ansprüchen 1 bis 3 angegebenen Bedeutungen besitzen, kuppelt, oder daß man vorzugsweise

d) ein Gemisch aus mindestens zwei Azofarbstoffen der Formel II

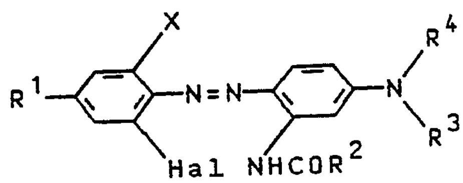

(II)

wobei

$R^1$, $R^2$, $R^3$ und $R^4$ die in den Ansprüchen 1 bis 3 angegebenen Bedeutungen besitzen,

X Cyan oder Hal und

Hal ein Halogenatom

bedeuten, einer nukleophilen Cyanid-Austauschreaktion unterwirft.

10. Verwendung der Azofarbstoffe der Formel I gemäß einem oder mehreren der Ansprüche 1 bis 3 oder des Azofarbstoffs des Anspruchs 7 oder der Mischungen der Azofarbstoffe der Formel I gemäß einem oder mehreren der Ansprüche 4 bis 6 zum Färben oder Bedrucken von hydrophoben Fasern.

**Revendications**

1. Colorant azoïque dépourvu de groupes ionogènes et répondant à la formule générale I:

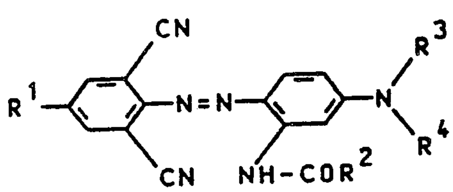

(I)

dans laquelle:

$R^1$ représente un groupe alkyle ayant 1 à 4 atomes de carbone,

$R^2$ représente un groupe alkyle ayant 1 à 3 atomes de carbone,

$R^3$ représente un groupe alkylcarbonyloxyéthyle ayant 1 à 3 atomes de carbone dans le groupe alkyle, alcoxycarbonyloxyéthyle ayant 1 à 4 atomes de carbone dans la groupe alcoxy, méthoxyéthoxycarbonyloxyéthyle ou éthoxyéthoxycarbonyloxyéthyle, et

$R^4$ peut avoir l'un des sens de $R^3$ et il peut représenter en outre un groupe cyanéthyle.

2. Colorant azoïque selon la revendication 1, caractérisé en ce que $R^1$ représente un groupe éthyle ou isopropyle et avantageusement un groupe méthyle.

3. Colorant azoïque selon la revendication 1 et/ou 2, caractérisé en ce que $R^3$ représente un groupe méthylcarbonyloxyéthyle ou éthylcarbonyloxyéthyle.

4. Mélange de deux ou plusieurs colorants azoïques différents, répondant à la formule I, selon une ou plusieurs des revendications 1 à 3.

5. Mélange de colorants azoïques selon la revendication 4, caractérisé en ce que, dans tous les colorants de formule I, le symbole $R^1$ représente un groupe méthyle.

6. Mélange de colorants azoïques selon la revendication 4 et/ou 5, caractérisé en ce qu'il a été chauffé, au cours de sa préparation, à une température d'au moins 80°C, avantageusement de 90 à 150°C.

7. Colorant azoïque de formule:

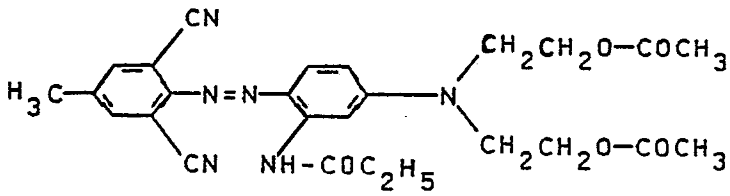

(I)

8. Procédé pour préparer des colorants azoïques de formule I selon une ou plusieurs des revendications 1 à 3 ou du colorant azoïque de la revendication 7, procédé caractérisé en ce que:

a) on soumet un colorant azoïque de formule II:

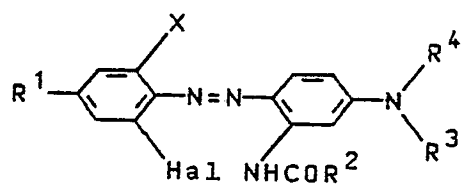

(II)

(dans laquelle $R^1$, $R^2$, $R^3$ et $R^4$ ont les sens indiqués aux revendications 1 à 3,

X représente un groupe cyano ou Hal, et

Hal est un atome d'halogène),

à une réaction d'échange pour introduire un groupe cyanure nucléophile, ou bien

b) on diazote une amine de formule V:

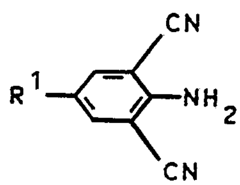

(V)

et l'on copule sur un copulant de formule IV:

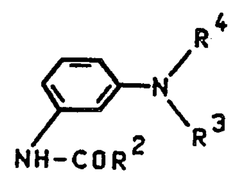

(IV)

(formules dans lesquelles $R^1$, $R^2$, $R^3$ et $R^4$ ont les sens précités).

9. Procédé pour préparer des mélanges de colorants azoïques de formule I selon une ou plusieurs des revendications 4 à 6, caractérisé en ce que:

a) on mélange ensemble deux ou plusieurs colorants individuels de formule I, ou bien
b) on diazote une ou plusieurs amines de formule V:

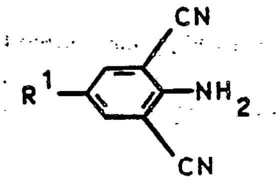

(V)

et l'on copule sur un mélange d'au moins deux copulants différents de formule IV:

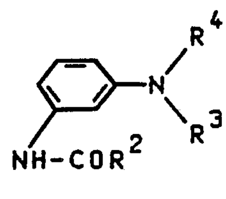

(IV)

(formules dans lesquelles $R^1$, $R^2$, $R^3$ et $R^4$ ont les sens indiqués aux revendications 1 à 3) ou bien
c) on diazote plusieurs amines de formule V:

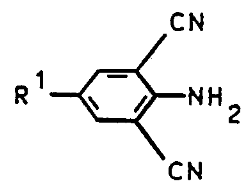

(V)

et l'on copule sur un copulant de formule IV:

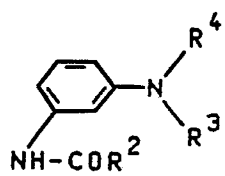

(IV)

(formules dans lesquelles $R^1$, $R^2$, $R^3$ et $R^4$ ont les sens indiqués aux revendications 1 à 3) ou, de préférence:
d) on soumet un mélange d'au moins dux colorants azoïques répondant à la formule II:

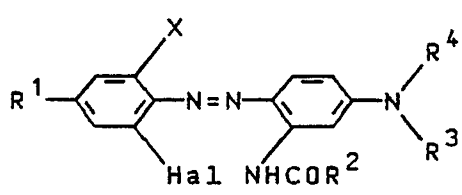

(II)

(dans laquelle $R^1$, $R^2$, $R^3$ et $R^4$ ont les sens indiqués aux revendications 1 à 3,
X représente un groupe cyano ou Hal, et
Hal représente un atome d'halogène),
à une réaction d'échange pour introduire un groupe cyanure nucléophile.

10. Utilisation des colorants azoïques de formule I selon l'une ou plusieurs des revendications 1 à 3 ou du colorant azoïque de la revendication 7 ou de mélanges de colorants azoïques de formule I selon une ou plusieurs des revendications 4 à 6 pour teindre ou imprimer des fibres hydrophobes.

**Claims**

1. Azo dye which is free of ionic groups and has the general formula I

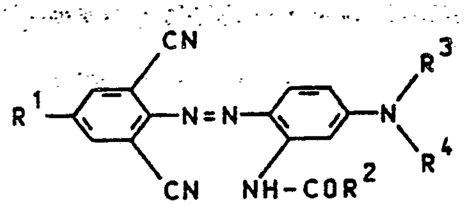

(I)

in which $R^1$ denotes alkyl having 1 to 4 C atoms, $R^2$ denotes alkyl having 1 to 3 C atoms, $R^3$ denotes alkylcarbonyloxyethyl having 1 to 3 C atomes in the alkyl group, alkoxycarbonyloxyethyl having 1 to 4 C atomes in the alkoxy group, methoxyethoxycarbonyloxyethyl or ethoxyethoxycarbonyloxyethyl and $R^4$ has one of the meanings of $R^3$ and can in addition by cyanoethyl.

2. Azo dye according to Claim 1, characterised in that $R^1$ denotes ethyl or i-propyl or preferably methyl.

3. Azo dye according to Claim 1 and/or 2, characterised in that $R^3$ denotes methylcarbonyloxyethyl or ethylcarbonyloxyethyl.

4. Mixture of two of more different azo dyes of the formula I of one or more of Claims 1 to 3.

5. Mixture of azo dyes according to Claim 4, characterised in that in all dyes of the formula I $R^1$ denotes methyl.

6. Mixture of azo dyes according to Claim 4 and/or 5, characterised in that it, in the course of its preparation, has been heated to a temperature of at least 80°C, preferably 90 to 150°C.

7. Azo dye of the formula

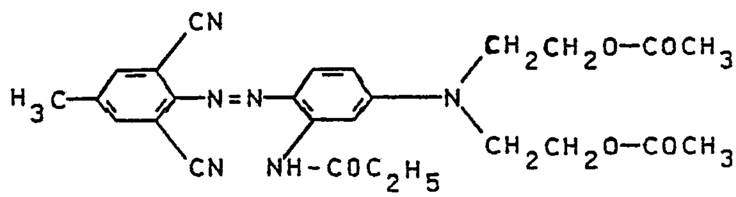

(I)

8. Process for preparing the azo dyes of the formula I of one or more of Claims 1 to 3, characterised in that

a) an azo dye of the formula II

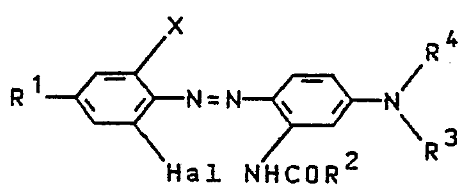

(II)

where

$R^1$, $R^2$, $R^3$ and $R^4$ have the meanings mentioned in Claims 1 to 3,

X denotes cyano or Hal and

Hal denotes a halogen atom

is subjected to a nucleophilic cyanide replacement reaction, or

b) an amine of the formula V

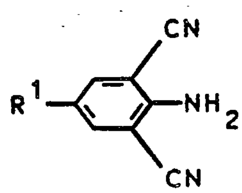

(V)

is diazotised and coupled onto a coupling component of the formula IV

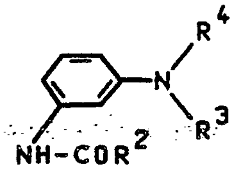

(IV)

where $R^1$, $R^2$, $R^3$ and $R^4$ have the abovementioned meanings.

9. Process for preparing the mixtures of azo dyes of the formula I according to one or more of Claims 4 to 6, characterised in that

a) two or more individual dyes of the formula I are mixed with one another or

b) one or more amines of the formula V

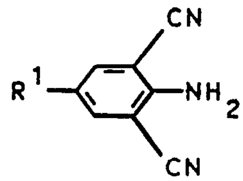

(V)

are diszotised and coupled onto a mixture of at least two different coupling components of the formula IV

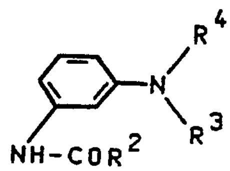

(IV)

where $R^1$, $R^2$, $R^3$ and $R^4$ have the meanings specified in Claims 1 to 3, or

c) a plurality of amines of the formula V

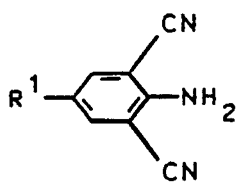

(V)

are diazotised and coupled onto a coupling component of the formula IV

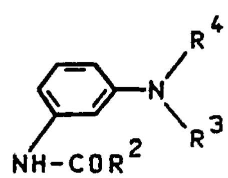

(IV)

where $R^1$, $R^2$, $R^3$ and $R^4$ have the meanings specified in Claims 1 to 3, or preferably

d) a mixture of at least two azo dyes of the formula II

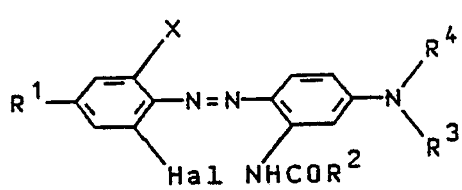

(II)

where

$R^1$, $R^2$, $R^3$ and $R^4$ have the meanings specified in Claims 1 to 3,

X denotes cyano or Hal and

Hal denotes a halogen atom

is subjected to a nucleophilic cyanide replacement reaction.

10. Use of the azo dyes of the formula I according to one or more of Claims 1 to 3 or of the azo dye according to Claim 7 or of mixtures of the azo dyes of the formula I according to one or more of Claims 4 to 6, for dyeing or printing hydrophobic fibers.